(19) Europäisches Patentamt
European Patent Office
Office européen des brevets

(11) Veröffentlichungsnummer: **0 647 466 A2**

(12) **EUROPÄISCHE PATENTANMELDUNG**

(21) Anmeldenummer: **94115544.2**

(22) Anmeldetag: **04.10.94**

(51) Int. Cl.6: **B01D 71/10**, B01D 67/00, D21C 9/147, A61M 1/16

(30) Priorität: **08.10.93 DE 4334277**

(43) Veröffentlichungstag der Anmeldung:
**12.04.95 Patentblatt 95/15**

(84) Benannte Vertragsstaaten:
**AT DE FR IT SE**

(71) Anmelder: **Akzo Nobel N.V.**
**Velperweg 76,**
**Postbus 9300**
**NL-6824 BM Arnhem (NL)**

(72) Erfinder: **Seifert, Jürgen, Dr.**
**Schillering 23**
**D-63868 Grosswallstadt (DE)**

(74) Vertreter: **Fett, Günter et al**
**Akzo Nobel Faser AG,**
**Kasinostrasse 19-21**
**D-42103 Wuppertal (DE)**

(54) **Cellulosische Membranen.**

(57) Die Erfindung betrifft ein Verfahren zur Herstellung cellulosischer Membranen in Form von Flachfolien, Schlauchfolien oder Hohlfäden mit verbesserter Biokompatibilität durch Verwendung von Baumwollfasern, insbesondere Linters, die in alkalischer Flotte in einem einstufigen Verfahren mit gasförmigem molekularem Sauerstoff behandelt werden; weiterhin betrifft die Erfindung derart aufbereitete Baumwollfasern insbesondere Linters, damit hergestellte Membranen sowie deren Verwendung zur Hemodialyse.

EP 0 647 466 A2

Die Erfindung betrifft ein Verfahren zur Herstellung cellulosischer Membranen in Form von Flachfolien, Schlauchfolien oder Hohlfäden mit verbesserter Biokompatibilität durch Verwendung aufbereiteter Baumwollfasern, insbesondere Linters; weiterhin betrifft die Erfindung derart aufbereitete Baumwollfasern, insbesondere Linters, damit hergestellte Membranen sowie deren Verwendung zur Hemodialyse.

Cellulosische Membranen sind bereits gut bekannt und finden in der Dialyse, der umgekehrten Osmose oder auch der Ultrafiltration Verwendung. Ein wesentliches Einsatzgebiet für die derartige Membranen sind Dialysatoren insbesondere für die Hemodialyse.

An Dialysemembranen für die Hemodialyse werden sehr hohe Anforderungen hinsichtlich der Biokompatibilität gestellt, damit das an den Membranen vorbeifließende Blut möglichst wenig beeinflußt wird und die Nebenwirkungen für den Dialysepatienten minimiert werden. Dabei spielt in Bezug auf die Biokompatibiltät neben anderen Faktoren das verwendete Membranmaterial eine entscheidende Rolle.

Die Cellulose wird zur Herstellung der Membranen entweder durch Verseifen von Celluloseacetat oder durch Ausfällen mit Säuren, Laugen, Salzlösungen oder Wasser aus Cuoxamlösungen oder Viskoselösungen regeneriert oder aus Lösungen in aprotischen Lösungsmitteln mit Salzen sowie aus Lösungen in tertiären Aminoxid ausgefällt.

Ausgangsmaterial für die Herstellung cellulosischer Membranen sind Baumwollfasern, insbesondere Baumwoll-Linters. Baumwolle enthält als Naturprodukt außer Cellulose noch eine Reihe von Begleitsubstanzen, wie Pektine, Wachse, Proteine, mineralische Bestandteile und andere, insbesondere organische Bestandteile. Je nach Reinigungsgrad sind auch noch Reste von Samenschalen vorhanden.

Die Baumwolle für textile Einsatzzwecke besteht aus relativ langen Fasern und wird im ersten Schritt der Trennung der Baumwollfasern von den Baumwollsamen (Entkörnen) gewonnen. Nach der Entkörnung verbleiben auf den Schalen der reifen Baumwollsamenkapseln noch kurze Härchen, die als Baumwoll-Linters oder Linters bezeichnet werden. Die Baumwoll-Linters werden in weiteren Verfahrensschritten maschinell von den Samenkapseln abgetrennt und enthalten in der Regel im Vergleich zur textilen Rohbaumwolle einen höheren Anteil an Verunreinigungen wie z. B. Reste von Samenschalen.

Linters enthalten in etwa folgende Bestandteile:

| | |
|---|---|
| Linters-Cellulose: | ca. 75 bis 90 Gew% |
| Wasser: | ca. 6 bis 8 Gew% |
| Öle, Fette, Wachse: | ca. 1 bis 3 Gew% |
| Reste von Samenschalen: | ca. 1 bis 5 Gew% |
| sonstige Verunreinigungen: | ca. 1 bis 5 Gew% |

Die Schwankungen hängen dabei insbesondere von der ursprünglichen Qualität und vom Gewinnungsverfahren der Linters ab. Dabei liegen die Linters im Unterschied zu anderen Naturfasern (wie z. B. Jute, Flax, Sisal, Holz) praktisch ligninfrei vor. Lediglich die Samenschalen selbst enthalten Xylosen und Lignin. Je nach Art und Herkunft der Baumwollpflanzen weist Linters-Cellulose einen durchschnittlichen Polymerisationsgrad (DP) von 3 000 bis 8 000 auf.

Vor der Weiterverarbeitung zu Membranen müssen die Baumwolle und in stärkerem Maße die Baumwoll-Linters einer Behandlung zur Reinigung und zum Aufschluß der Fasern unterzogen werden. Die behandelten Baumwollfasern bzw. Linters sollen in der Trockenmasse einen Cellulosegehalt von mindestens 98 Gew.% aufweisen. Darüberhinaus ist ein möglichst geringer Gehalt an extrahierbaren Neutralzuckern und vor allem Mehrfachzuckern im Hinblick auf gute Biokompatibilitätseigenschaften erforderlich. Eine diesen Anforderungen genügende Behandlung besteht in der Regel in einer Beuche und einer nachfolgenden Bleiche.

Die Beuche dient dazu, die erwähnten Begleitsubstanzen und Verunreinigungen wie insbesondere die Reste der Samenschalen, d. h. die nicht-cellulosischen Bestandteile zu entfernen oder zu zerstören. Sie wird üblicherweise im alkalischen Milieu ("alkalische Flotte") durchgeführt; hierbei wird die Baumwolle bzw. die Linters "aufgeschlossen", sie wird hydrophiliert, quillt auf und wird z. B. empfänglich für Bleich- und Färbemittel. Oft wird mit der Beuche gleichzeitig auch noch ein gewünschter Polymerisationsgrad der Cellulose gezielt eingestellt, um z.B. die Viskosität daraus hergestellter Celluloselösungen für die Weiterverarbeitung zu reduzieren.

Nach dem Stand der Technik ist streng darauf zu achten, daß während der Beuche kein Sauerstoff wie z. B. Luftsauerstoff zugegen ist. Vor Beginn der Beuche muß der Luftsauerstoff vollständig aus den Beuchegefäßen entfernt werden, andernfalls wird bei diesen Verfahren nach dem Stand der Technik eine Faserschädigung hervorgerufen, d.h. die Cellulose wird in unkontrollierter Weise oxidativ geschädigt und außerdem der Polymerisationsgrad sowie auch die Ausbeute an vorbehandelter Linters in unerwünschter Weise erniedrigt.

Im Anschluß an die Beuche werden die Baumwollfasern bzw. die Baumwoll-Linters gegebenenfalls in neutralem oder schwach alkalischem Milieu nachgebeucht, gründlich mit Wasser gespült und gegebenenfalls letzte Alkalireste abgesäuert. Nach der Beuche sind die Baumwollfasern bzw. die Linters leicht gelblich bis grau gefärbt.

Zur Zerstörung der in der Cellulose verbliebenen Farbstoffe und zur restlosen Beseitigung der in der Beuche bereits weitgehend entfernten oder aufgelockerten Verunreinigungen werden die Baumwolle oder die Linters einer anschließenden Bleiche unterzogen. Hierbei sollen die chemischen und physikalischen Eigenschaften der Cellulose erhalten bleiben.

Sowohl die Beuche als auch die Bleiche können jeweils für sich ein- oder mehrstufig ablaufen. Da sie nach dem Stand der Technik mit unterschiedlichen Chemikalien und Reagenzien sowie bei unterschiedlichen Reaktionsbedingungen durchgeführt werden, handelt es sich bei der Beuche und der Bleiche in der Regel um zwei separate, d.h. nacheinander und getrennt durchzuführende Verfahrensschritte, die für sich jeweils mit ein- oder mehrfachen Waschschritten verbunden sind.

Dabei sind nach den bisherigen Arbeitsweisen zum Teil erhebliche Mengen an Wasser, Energie sowie Chemikalien pro eingesetztem Kilogramm Baumwollfasern bzw. Linters notwendig. So werden beispielsweise bei den typischen, in der Industrie verwendeten Beuch- und Bleichverfahren insgesamt ca. 130 bis 170 Liter Wasser pro Kilogramm Baumwoll-Linters verbraucht, und der Zeitaufwand hierfür beträgt rund 20 Stunden. Nachteilig bei den klassischen Verfahren wirkt sich auch aus, daß eine gesamte organische Schmutzfracht von typischerweise ca. 200 g/kg Baumwoll-Linters und eine anorganische Schmutzfracht, die von der Neutralisation der im Überschuß eingesetzten Lauge herrührt, von rund 200 bis 300 g/kg Baumwoll-Linters (als $Na_2SO_4$ gerechnet) entsteht.

Allerdings sind aus der Literatur zur Aufbereitung von Baumwollfasern bzw. textile Baumwollwaren auch Zwischenstufen bekannt. So wird z. B. bereits bei P. Heermann (Enzyklopädie der textilchemischen Technologie, Verlag Julius Springer, Berlin 1930) beschrieben, daß bei Zusatz von Oxydationsmitteln wie Natriumperoxid, Perborat oder Aktivin zur Beuchflotte außer der Beuche selbst auch eine gewisse Vorbleiche der Baumwolle erreicht wird. Andererseits kann mittels Oxydationsbleichverfahren neben der Bleiche auch eine Reinigung der Baumwolle erreicht werden. Der Reinigungsvorgang hierbei wird jedoch als verschieden von dem der Beuche charakterisiert, insbesondere wird eine verringerte Saugfähigkeit bzw. Hydrophilie der so behandelten Baumwollwaren beobachtet. In neuerer Zeit wird über Peroxidbleichverfahren berichtet (D. Bassing, Textilveredelung (22) 6, 1987, S. 226-230), bei denen in einem Einstufenprozeß ohne vorherige Beuch- oder Abkochstufen unter Zusatz von Komplexbildnern auch eine gute Saugfähigkeit erzielt wurde. Es wird in diesen Schriften aber nicht erwähnt, ob die angegebenen Verfahren auch zur Behandlung von Baumwoll-Linters mit befriedigendem Ergebnis eingesetzt werden können. Die Verwendung nach diesen Verfahren behandelter Baumwollfasern als Rohstoff zur Membranherstellung wird ebenfalls nicht benannt.

In der Patentschrift DE-OS 19 54 267 wird die Behandlung von cellulosehaltigen Materialien mit Alkali unter Einleitung von Luft oder Sauerstoffgas beschrieben, wobei das Verfahren aber unter Anwesenheit von einem Magnesiumsalz und einem komplexbildenden Mittel durchgeführt wird. Dieses Verfahren dient im Besonderen der Aufbereitung ligninhaltiger Holzcellulosen, da es zur Entfernung des Lignins besondere Vorteile bietet. Bei ligninfreien Cellulosen dienen die eingesetzten Komplexverbindungen zur Vermeidung eines unkontrollierten Abbaus der Cellulosemoleküle. Das in der genannten Patentschrift beschriebene Sauerstoff-Behandlungsverfahren stellt jedoch stets nur eine von mehreren Behandlungsstufen dar und bezieht sich stets auf die Herstellung von Pulpen, vorzugweise aus Holzzellstoff, d.h. von Ausgangsmaterialien für die Papierindustrie, und damit nicht auf die Herstellung von Ausgangsmaterialien für Membranen.

Gleiches gilt für die DE-PS 21 41 757, in der ebenfalls der Einsatz von sauerstoffhaltigem Gas beschrieben wird, wobei ausschließlich auf das Bleichen von vorher chemisch aufgeschlossenem Zellstoffbrei bezogen wird und in der Flotte Bleichlauge und Aufschlußlauge aus der vorgeschalteten Behandlungsstufe gleichzeitig vorliegen müssen, um den gewünschten Bleicheffekt und einen verbesserten Delignifizierungseffekt erzielen zu können. Auch hier stellt die Sauerstoff-Bleichstufe nur einen Prozeß-Schritt von mehreren Behandlungs- und Bleichschritten zur Aufarbeitung von Zellstoff dar.

Beide erwähnten Verfahren gemäß dem Stand der Technik bedingen darüberhinaus erhebliche Abwassermengen, und es werden große Mengen an Wasser, Energie und Chemikalien benötigt, um die Verfahren überhaupt durchführen zu können.

Zur Herstellung von cellulosischen Membranen werden die Baumwollfasern bzw. die Baumwoll-Linters nach der Beuch-/Bleichbehandlung, d.h. nach zwei unterschiedlichen, unabhängigen Verfahrensschritten und in der Regel einer anschließenden Trocknung in gelöste Form gebracht. Die Lösungen werden zu Hohlfäden, Schläuchen oder Folien geformt, dabei wird die Cellulose entweder regeneriert oder ausgefällt.

Unter Verwendung von nach dem Stand der Technik gebeuchten und gebleichten Linters hergestellte Dialysemembranen aus regenerierter Cellulose zeigen bei der Hemodialyse eine deutliche Komplement-Aktivierung. Zur Verbesserung der Biokompatibilität unter anderem durch Reduzierung der Komplement-Aktivierung unter Beibehaltung anderer, günstiger Eigenschaften der Cellulosemembranen gibt es verschiedene Ansätze wie z. B. durch Substitution modifizierte Cellulose, Beimischen von durch Substitution modifizierter Cellulose oder Beimischen anderer geeigneter Polymerer, wie sie etwa in den Schriften DE-OS 35 24 596, EP 0 416 377, DE-OS 40 17 745 zu finden sind. Derartige Verfahren führen jedoch stets aufgrund notwendiger zusätzlicher Verfahrensschritte zu einem erhöhten Aufwand.

Der Erfindung liegt daher die Aufgabe zugrunde, cellulosische Membranen mit verbesserter Biokompatibilität unter Verwendung von Baumwollfasern, insbesondere Baumwoll-Linters, die durch ein verbessertes, einfaches, umweltfreundliches und wirtschaftliches Verfahren aufbereitet wurden, zur Verfügung zu stellen.

Diese Aufgabe wird gelöst durch ein Verfahren zur Herstellung von Membranen in Form von Hohlfäden, Schlauchfolien oder Flachfolien durch Aufbereitung von Baumwollfasern, insbesondere Baumwoll-Linters, Lösen der aufbereiteten Baumwollfasern bzw. Linters auf chemischem oder physikalischem Wege und Verformen der so erhaltenen Lösung zu Membranen, dadurch gekennzeichnet, daß man die Baumwollfasern bzw. die Linters in alkalischer Flotte in einem einstufigen Verfahren mit gasförmigem molekularem Sauerstoff behandelt, die Baumwollfasern bzw. Baumwoll-Linters von der alkalischen Flotte abtrennt, wäscht und gegebenenfalls trocknet, anschließend auf chemischem oder physikalischem Wege in Lösung bringt und die Lösung unter Regeneration oder Ausfällen der Cellulose sodann zu Membranen verarbeitet.

Das für die Regeneration von Cellulose bei der Herstellung von Membranen am häufigsten angewandte Verfahren ist das Cuoxam (Kupferammoniumkomplex, Schweitzers Reagens)-Verfahren. Dementsprechend ist eine bevorzugte Ausführungsform der Erfindung dadurch gekennzeichnet, daß die Baumwollfasern bzw. die Baumwoll-Linters nach dem Cuoxam-Verfahren gelöst werden.

In gleicher Weise ist die Verarbeitung der erfindungsgemäß aufbereiteten Baumwollfasern bzw. Baumwoll-Linters nach dem Cellulose-Xanthogenatverfahren (Viskoseverfahren) durchführbar. Das Xanthogenatverfahren ist z.B. beschrieben in der Patentschrift DD-PS 143 037.

Eine weitere bevorzugte Ausführungsform betrifft die Verwendung von Celluloselösemitteln, die aus einem Gemisch aus aprotischen Lösemitteln und einem Salz der Elemente Li, Ca, und/oder Mg bestehen. Aprotische Lösemittel sind beispielsweise Dimethylacetamid und/oder Dimethylsulfoxid, als Salze können LiCl oder CaCl eingesetzt werden.

Bevorzugt werden die aufbereiteten Baumwollfasern bzw. Linters auch in tertiärem Aminoxid als Celluloselösemittel gelöst, wobei der Lösung auch die Cellulose nicht lösende Verdünnungsmittel, beispielsweise Wasser, zugesetzt werden.

Ein wesentliches Einsatzgebiet der nach einem der erfindungsgemäßen Verfahren hergestellten Membranen ist die Hemodialyse. Hierfür ist die Biokompatibilität der Membranen von besonderem Interesse.

Bei der Hemodialyse mittels Membranen aus regenerierter Cellulose hat man eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden. Andernfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander, und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hemodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983, und D.E. Chenoweth, Asaio-Journal Vol. 7, Seite 44 ff, 1984.

Im Rahmen der vorliegenden Erfindung wurde die Komplementaktivierung anhand der Fragmente C5a beurteilt. Dazu wurden in vitro 240 ml heparinisiertes Blut über einen Zeitraum von 3 Stunden mit einem Blutfluß von 250 ml/min durch einen Dialysator mit ca. 1 $m^2$ effektiver Austauschfläche rezirkuliert. In dem Plasma wurden die C5a-Fragmente mit Hilfe der ELISA-Methode (Enzyme Linked Immuno Essay, Fa. Behringer, Deutschland) bestimmt. Die C5a-Konzentration wird in ng/ml angegeben, zur Bewertung wurde der Meßwert nach 3 Std. herangezogen.

4

Überraschend wurde für die erfindungsgemäßen Membranen eine gegenüber Membranen, die aus nach dem Stand der Technik gebeuchten und gebleichten Baumwollfasern bzw. Linters ohne weitere Behandlung der Cellulose hergestellt wurden, deutliche Reduzierung der Komplement-Aktivierung festgestellt. In einer vorteilhaften Ausführung der erfindungsgemäßen Membran ist die Komplement-Aktivierung, gemessen als C5a, kleiner als 500 ng/ml, vorzugsweise kleiner als 400 ng/ml in einer besonders vorteilhaften Ausführung kleiner als 300 ng/ml. Derartig geringe C5a-Werte werden für cellulosische Membranen sonst nur dann erreicht, wenn die Cellulose durch Substitution modifiziert oder durch Substitution modifizierte Cellulose oder andere geeignete Polymere beigemischt werden.

Deshalb ist auch Gegenstand der Erfindung die Membran im wesentlichen aus Cellulose oder im wesentlichen aus regenerierter Cellulose an sich, die sich dadurch auszeichnet, daß sie eine Komplementaktivierung, gemessen als C5a, von kleiner als 500 ng/ml, vorzugsweise von kleiner als 400 ng/ml und in einer besonders vorteilhaften Ausführung von kleiner als 300 ng/ml aufweist.

Eine weitere Aufgabe der Erfindung bestand darin, ein verbessertes, einfaches umweltfreundliches und wirtschaftliches Verfahren zur Aufbereitung von Baumwollfasern, insbesondere Linters zur Verfügung zu stellen.

Diese Aufgabe wird gelöst durch ein Verfahren zum Aufbereiten von Baumwollfasern, insbesondere Linters mit Oxidationsmitteln, das dadurch gekennzeichnet ist, daß man die Baumwollfasern bzw. Linters in alkalischer Flotte in einem einstufigen Verfahren mit gasförmigem molekularem Sauerstoff behandelt, die Baumwollfasern bzw. Linters von der alkalischen Flotte abtrennt, wäscht und gegebenenfalls trocknet.

Nach der Aufbereitung bestehen die Baumwollfasern bzw. Linters zu praktisch 100 Gew.% aus Cellulose. Im folgenden aufgeführte Konzentrationsangaben, die sich auf das fertig aufbereitete Produkt beziehen, werden daher z.B. in kg/kg Cellulose angegeben.

Wie beschrieben sind die klassischen Verfahren zur Behandlung von Baumwollfasern bzw. Linters, also die Beuch-/Bleichverfahren nach dem Stand der Technik darauf ausgerichtet, Luftsauerstoff bzw. molekularen Sauerstoff während der Beuchbehandlung auszuschließen und in der Bleiche bevorzugt Per-Verbindungen einzusetzen. Solche Bleichverfahren sind z.B. in der DE-PS 698 164 oder der DE-OS 40 35 813 beschrieben.

Wie aus neueren Untersuchungen hervorgeht (J. Dannacher, W. Schlenker, Textilveredelung (25) 6, 1990, S. 205-207) ist bei der Bleiche mit Wasserstoffperoxidverbindungen "gewöhnlicher", d.h. molekularer Sauerstoff nicht das aktive Agens, sondern das sogenannte Perhydroxyradikal, das u.a. bei der Zersetzung der Peroxidverbindungen auftritt. Die anderen Zersetzungsprodukte, wie der Singlettsauerstoff, d.h. der in seinem ersten elektronisch angeregten Zustand sich befindende molekulare Sauerstoff, das Perhydroxylanion und das Hydroxylanion üben nach dieser Veröffentlichung keinen merklichen Einfluß aus. In einer weiteren Schrift (DE-OS 40 35 813) wird molekularer Sauerstoff, der bei der Disproportionierung von Peroxoverbindungen ensteht, d.h. molekularer Sauerstoff im elektronisch angeregten Zustand, also Singlettsauerstoff, für ein schonendes Bleichverfahren eingesetzt.

Es war daher völlig überraschend, daß mit der Anwesenheit von gasförmigem molekularen Sauerstoff überhaupt eine positive Wirkung bei dem erfindungsgemäßen Behandlungsverfahren für Baumwollfasern bzw. Linters erzielt wurde.

Dem molekularen Sauerstoff können bei dem erfindungsgemäßen Verfahren in einem Bereich von 0,1 bis 80 Gew.% weitere Gase zugesetzt werden. Als besonders geeignet haben sich hierfür $O_3$, $CO_2$, $N_2$, $SO_2$, $NO_2$, $NH_3$ und oder Luft, einzeln oder als Gemische, erwiesen.

In einer weiteren bevorzugten Ausführungsform der Erfindung wird daher der alkalischen Flotte Luft zugegeben.

Bevorzugt wird der molekulare Sauerstoff in einer Konzentration von 0,001 bis 4 kg pro kg Cellulose, besonders bevorzugt von 0,01 bis 1 kg pro kg Cellulose verwendet. Am günstigsten hat es sich jedoch erwiesen, den gasförmigen molekularen Sauerstoff in einer Konzentration von 0,02 bis 0,4 kg pro kg Cellulose zu verwenden.

In einer vorteilhaften Ausführung wird das Verfahren in einem geschlossenen Autoklaven durchgeführt, wobei Füllgrade von 20-99%, bevorzugt von 50-95%, und Sauerstoffdrücke bei 20°C von 0,5-50 bar, bevorzugt von 1-20 bar, besonders bevorzugt von 5-10 bar eingestellt werden.

Bevorzugt wird das den molekularen Sauerstoff enthaltene Gas oder Gasgemisch ganz oder teilweise rezirkuliert, so daß nur ein Minimum an neuem, frischem Gas oder Gasgemisch zugesetzt werden muß.

Bevorzugt werden für die alkalische Flotte wäßrige Lösungen von alkalisch wirkenden, anorganischen Verbindungen wie z.B. Hydroxide, Oxide und/oder Carbonate der Alkali- und/oder Erdalkalimetalle, ggf. als Mischung derselben, verwendet.

Gemäß einer weiteren Ausführungsform der Erfindung kann die alkalische Flotte aus wäßrigen ammoniakalischen Lösungen oder aus wäßrigen Lösungen von organischen, alkalisch wirkenden Substanzen gebildet werden.

Bevorzugt handelt es sich bei den organischen, alkalisch wirkenden Substanzen um Amine.

Die vorteilhaften Einsatzmengen der obengenannten alkalischen Verbindungen liegen in der Summe bei 0,01-0,2 kg/kg Cellulose, bevorzugt bei 0,04-0,12 kg/kg Cellulose.

Nach dem Stand der Technik liegen bei der Beuche die erforderlichen NaOH-Konzentrationen in der Flüssigkeit typischerweise bei 0,25-0,4 kg NaOH pro kg Beuchlinters, d.h. fertig gebeuchte Linters (vgl. Tabelle 1), d.h. rund die drei- bis vierfache Menge als bei dem erfindungsgemäßen Verfahren benötigt werden.

Der alkalischen Flotte werden bevorzugt weitere Stoffe wie etwa Peroxide, Perborate, Bleichaktivatoren, komplexbildende, oberflächenaktive, dispergierend wirkende Stoffe und/oder Alkohole zugesetzt. Bei den Bleichaktivatoren handelt es sich beispielsweise um TAED (Tetraacetylethylendiamin); bei den komplexbildenden z.B. um EDTA (Ethylendiamintetraessigsäure) und bei den Alkoholen z.B. um Methanol, Ethanol und/oder Isopropylalkohol. Die oberflächenaktiven Substanzen sind typischerweise alkaliresistente nichtionische oder anionische Tenside.

In einer vorteilhaften Ausführung wird das Verfahren so ausgeführt, daß man in das Reaktionsgefäß, bevorzugt in einen Druckautoklaven, in beliebiger Reihenfolge die alkalische Flotte und die Linters einführt und den Autoklaven mit der gewünschten Menge des Gases bzw. Gasgemisches beaufschlagt. Es ist zweckmäßig, den Reaktorinhalt zu durchmischen und zu erwärmen.

Vorteilhaft weist die alkalische Flotte eine Temperatur von 40 bis 200°, bevorzugt von 100 bis 180° und besonders bevorzugt von 100 bis 160°C auf. Die Beheizung kann beispielsweise über Doppelmantel oder innenliegende Heizschlangen (indirekte Beheizung) oder auch direkt durch Heizdampfeinspeisung in den Reaktionsraum erfolgen.

Die Reaktionszeiten sind nicht sehr kritisch, sie betragen zwischen 0,2 und 6 Stunden, bevorzugt zwischen 0,5 und 3 Stunden und besonders bevorzugt zwischen 1 und 2 Stunden.

Die Flottenverhältnisse bewegen sich zwischen 1 : 3 und 1 : 100, bevorzugt zwischen 1 : 5 und 1 : 30 und besonders bevorzugt zwischen 1 : 8 und 1 : 15.

Bevorzugt wird als Reaktor ein Rührreaktor verwendet. Bei einer bevorzugten Ausführungsform des Verfahrens werden die Baumwollfasern oder die Baumwoll-Linters im Reaktor fest vorgelegt und die Reaktionsflüssigkeit zirkuliert.

Die Reaktoren können dabei absatzweise oder kontinuierlich betrieben werden. Es ist möglich, daß 2 oder mehr Reaktoren absatzweise im Wechsel betrieben werden.

Der nachfolgende Vergleich (Tabelle 1) zwischen dem erfindungsgemäßen Verfahren und dem Stand der Technik zeigt, daß mit dem erfindungsgemäßen Verfahren höhere Raum-Zeit-Ausbeuten möglich sind, der Einsatz von Verbrauchsstoffen maßgeblich reduziert wird und gleichzeitig die Umweltbelastung minimiert wird. Mit dem erfindungsgemäßen Verfahren ist ebenfalls eine erhebliche Kostenreduzierung verbunden.

Tabelle 1

| Vergleich zwischen erfindungsgemäßem Verfahren und dem üblichen Stand der Technik. | | typischer Bedarf an Roh-/Hilfsstoffen | erfindungsgemäßes Verfahren kg/kg Produkt | Stand der Technik kg/kg Produkt |
|---|---|---|---|---|
| **1. Schritt** | Rohlinters | | 1.18 | 1.30 |
| | NaOH | | 0.08 | 0.25 |
| | Wasser (incl. Waschwasser) | | ca. 30 | ca. 100 |
| **2. Schritt** | Beuchlinters | | - | 1.05 |
| | Bisulfitlauge | | - | 0.015 |
| | Chlorgas | | - | 0.10 |
| | Schwefelsäure | | - | 0.012 |
| | Wasser | | - | 50 |
| | Gesamte Chargenzeit, h | | 4 | 19 |
| | Gesamter Energiebedarf (MJ/kg Bleichlinters) | | 15 | 33 |
| | Lintersausbeute % | | 85 | 73 * |
| | organ. Nebenprod. (als CSB in g/kg Produkt) | | ca. 105 | ca. 200 |
| | anorgan. Nebenprod. (als $Na_2SO_4$ in g/kg Prod.) | | <1 | ca. 270 |
| (CSB = Chemischer Sauerstoffbedarf) | | | | |
| (* = nach Beuche und Bleiche) | | | | |

Bei den Beuchverfahren nach dem Stand der Technik fällt als Nebenprodukt eine stark alkalische, fast schwarze, übelriechende Ablauge ("Schwarzlauge") an, die heute in kommunalen Kläranlagen kaum mehr entsorgt werden kann. Durch die notwendige Neutralisation derselben entstehen zudem die oben angegebenen, hohen Salzfrachten.

Das erfindungsgemäße Verfahren hingegen kann so gefahren werden, daß eine nahezu neutrale "Ablauge" anfällt (Beispiel 1), die zudem klar, von hellgelber Farbe und nahezu geruchlos ist. Sie enthält zudem eine deutlich reduzierte organische Schmutzfracht. Wegen ihres günstigen pH-Wertes braucht praktisch nicht neutralisiert zu werden, so daß auch nahezu keine anorganischen Salze als Abwasserfracht anfallen.

**Beispiel 1**

Ein handelsüblicher Ein-Liter-Druckautoklav mit Doppelmantelbeheizung und Rührwerk (Büchi-Reaktor) wurde mit folgenden Mengen beschickt (Rohlintersmenge absolut: ca. 25 g).

| | kg Einsatz/kg aufbereitete Linters |
|---|---|
| Rohlinters | 1,18 |
| NaOH | 0,076 |
| Wasser | 19 |
| molekularer Sauerstoff | 0,25 |

Der Reaktor wurde mit etwa 50% seines Nennvolumens befüllt und während einer Reaktionszeit von zwei Stunden unter Rühren auf einer Temperatur von 160°C gehalten. Der Sauerstoffdruck (bei 20°C) betrug 10 bar und der Gesamtdruck bei Reaktionstemperatur (160°C) ca. 20 bar.

Nach Beendigung der Reaktion wird der Reaktor abgekühlt und durch Abblasen des Sauerstoffs, der nur zu einem geringen Teil während der Reaktion verbraucht wurde, entspannt. Anschließend werden die so behandelten Linters filtriert und mit ca. 10 l Wasser pro kg Linters gewaschen.

Danach werden die Linters verschiedenen Messungen unterworfen, wobei zuerst der Weißgrad nach Elrepho gewonnen wird. Hierbei handelt es sich um ein Standardverfahren zur Messung des Weißgrades von gebleichten und ungebleichten Substanzen. Verwendet wird das Elrephogerät der Fa. Carl Zeiss, Oberkochen. Gemessen wird der Licht-Remissionsgrad der zu einer Tablette verpreßten Probe gegen

BaSO$_4$ als Weiß-Standard. Dabei wurde ein R46-Filter verwendet. Die Messung wird gemäß DIN 53 145 durchgeführt. Gemessen wurden außerdem der durchschnittliche Polymerisationsgrad (DP), der chemische Sauerstoffbedarf (CSB) des Abwassers, die Carboxylgruppenzahl der aufbereiteten Linters sowie für dieses Beispiel der Gehalt an extrahierbaren Einfach- bzw. Mehrfachzuckern.

Der Weißgrad der Linters nach Beispiel 1 betrug ca. 73% nach Elrepho und entsprach damit dem Weißgrad von nach klassischen Methoden gebeuchten und gebleichten Linters. Die Reste der Samenschalen und die sonstigen Verunreinigungen waren vollständig entfernt. Der Polymerisationsgrad betrug 1107 ± 47 und entsprach damit ebenfalls den nach klassischen Verfahren erhaltenen Werten. Die Lintersausbeute betrug 85,7%. Für die Berechnung der Ausbeute wurde jeweils die Masse Reaktionsprodukt, d.h. Cellulose, zu Masse Linters-Einwaage, jeweils bei 60°C und 20 mbar über ca. 10 Stunden getrocknet, herangezogen und ins Verhältnis gesetzt.

Als Reaktionsnebenprodukt wurde eine klare, sowie nahezu farb- und geruchlose Flüssigkeit von etwa 20 l/kg Cellulose erhalten, die einen Gehalt an freier NaOH von weniger als 0,01 g/l aufwies, d.h. mit einem pH-Wert von 7-9 praktisch neutral war, und deren CSB-Wert lediglich rund 5500 mg/l (entsprechend 105 g/kg Cellulose) betrug.

Der Carboxylgruppengehalt der aufbereiteten Linters betrug 17,0 mmol/kg Cellulose und entsprach damit dem Wert für konventionell gebeuchte und gebleichte Linters, der üblicherweise bei 10-20 mmol/kg Cellulose liegt.

Gerade für die Herstellung von Membranen, für die, wie erwähnt, die Extrakte für Neutralzucker und Mehrfachzucker so gering wie möglich sein sollten, scheinen Linters, die nach dem erfindungsgemäßen Verfahren aufbereitet wurden, besonders geeignet zu sein: Für die entsprechend Beispiel 1 aufbereiteten Linters ist der Gehalt an extrahierbaren Neutralzuckern gleich, der an Mehrfachzuckern signifikant niedriger als bei konventionell hergestellten Vergleichsproben (Tabellen 2 und 3).

Tabelle 2

| Extrahierbare Mengen an Neutralzuckern in aufbereiteten Linters | | | | | | |
|---|---|---|---|---|---|---|
| **Zucker** | Gehalt [Gew%] | | | Gehalt [mMol/kg] | | |
| | Hersteller 2 | Beispiel 1 erfindungsgemäßes Verfahren) | Hersteller 1 | Hersteller 2 | Beispiel 1 (erfindungsgemäßes Verfahren) | Hersteller 1 |
| Fucose | 0.00 | 0.00 | 0.00 | 0.00 | 0.00 | 0.00 |
| Arabinose | 0.03 | 0.04 | 0.03 | 2.27 | 3.04 | 2.27 |
| Xylose | 0.08 | 0.08 | 0.09 | 6.04 | 6.07 | 6.82 |
| Mannose | 0.00 | 0.00 | 0.00 | 0.00 | 0.00 | 0.00 |
| Galactose | 0.05 | 0.00 | 0.00 | 3.10 | 0.00 | 0.00 |
| **Summe** | **0.16** | **0.12** | **0.12** | **11.41** | **9.11** | **9.10** |

Tabelle 3

| Mehrfachzuckergehalte von aufbereiteten Linters [in Flächen% FID*] | | | |
|---|---|---|---|
| Zucker | Bleichlinters Hersteller 2 (St.d.T.) | erfindungsgemäß aufbereitete Linters Beispiel 1 | Bleichlinters Hersteller 1 (St.d.T.) |
| 1,3 ß-Glc. | 1.11 | 0.63 | 2.84 |
| 1,2,3-Glc. | 0.03 | 0.00 | 0.00 |
| 1,3,6-Glc. | 0.60 | 0.55 | 2.83 |
| 1,2,3,6-Glc. | 0.27 | 0.42 | 0.93 |
| **Summe** | **2.01** | **1.60** | **6.63** |

(Glc. = Glucan)

(* FID = Flammenionisationsdetektor)

**Beispiele 2 bis 11**

Die Beispiele 2 bis 12 wurden unter den gleichen Bedingungen wie Beispiel 1 ausgeführt, wobei einige Prozeßparameter entsprechend der Tabelle 4 variiert wurden.

Zusätzlich zu den Versuchsergebnissen wurden in dieser Tabelle zum Vergleich aufgeführt: DP- und Farbwerte der eingesetzten Rohlinters sowie von zwei industriell hergestellten Bleichlinters-Vergleichsproben.

Es zeigt sich, daß der DP in den erfindungsgemäß aufbereiteten Linters ohne nennenswerte Verschlechterung von Carboxylgruppenzahl oder Weißgrad gezielt in einem Bereich von etwa 500 bis 3500 variiert werden kann.

**Beispiele 12 bis 17**

Für diese Versuche im Technikumsmaßstab wurde ein 150 L Titan-Druckautoklav mit vertikalem Schrägblattrührwerk und Doppelmantelbeheizung verwendet. In diesem Reaktor konnten Flottenverhältnisse bis 1 : 10 realisiert werden.

Die übrigen Versuchsbedingungen sind wie in Beispiel 1 beschrieben; die Versuchsbedingungen und Ergebnisse sind in der Tabelle 5 wiedergegeben.

**Tabelle 4:** Eigenschaften erfindungsgemäß aufbereiteter Linters (Flottenverhältnis: 1 : 19)

| Beispiel | Temp [°C] | Zeit [h] | Druck $O_2$ bei 20 °C [bar] | Ausbeute [%] atro | DP | Flotten- zusammen- setzung % NaOH | pH - Wert vor Reaktion | pH - Wert nach Reaktion | Farbe u. Elrepho | COOH mmol/kg | CSB mg/l | CSB g/kg Cellulose |
|---|---|---|---|---|---|---|---|---|---|---|---|---|
| 2 | 160 | 2 | 10 | 67.37 | 568 ± 18 | 1 | 13.00 | 8.60 | 66.7 | 22.3 | n.b.[1] | n.b. |
| 3 | 160 | 2 | 5 | 83.46 | 1719 ± 47 | 0.4 | 13.00 | 8.13 | 68.1 | 12.4 | n.b. | n.b. |
| 4 | 160 | 2 | 10 | 89.47 | 1589 ± 44 | 0.04 | 11.70 | 5.13 | 52.7 | n.b. | n.b. | n.b. |
| 5 | 160 | 0.5 | 5 | 86.10 | 2151 ± 79 | 0.4 | 13.17 | 9.10 | 63.7 | n.b. | n.b. | n.b. |
| 6 | 160 | 0.5 | 10 | 86.10 | 1950 ± 94 | 0.4 | 13.21 | 8.88 | 66.5 | n.b. | n.b. | n.b. |
| 7 | 160 | 1 | 5 | 69.30 | 536 ± 10 | 1 | 13.94 | 9.45 | 70.4 | n.b. | 12388 | 235.4 |
| 8 | 160 | 1 | 5 | 84.53 | 2216 ± 106 | 0.4 | 13.00 | 8.68 | 68.7 | 12.3 | 6006 | 114.1 |
| 9 | 160 | 1 | 10 | 83.50 | 1734 ± 65 | 0.4 | 13.07 | 8.54 | 67.6 | n.b. | n.b. | n.b. |
| 10 | 140 | 2 | 5 | 85.64 | 3264 ± 112 | 0.4 | 13.00 | 9.65 | 71.2 | n.b. | 5931 | 102.4 |
| 11 | 140 | 2 | 10 | 86.60 | 2579 ± 112 | 0.4 | 13.14 | 9.16 | 66.4 | n.b. | n.b. | n.b. |
| Rohlinters | | | | | 7047 ± 1528 | | | | 30.4 | 25.5 | | |
| Bleichlinters 1 | | | | | 1301 ± 18 | | | | 57.4 | 10.0 | | |
| Bleichlinters 2 | | | | | 1111 ± 66 | | | | 68.9 | 6.6 | | |

1) n.b. = nicht bestimmt

EP 0 647 466 A2

Tabelle 5

| Aufbereitung von Linters im Technikumsmaßstab (Temperatur = 160°C, Zeit = 2,0 h) | | | | | | | | |
|---|---|---|---|---|---|---|---|---|
| Bsp. | Rohlinterseinwaage kg | Ausbeute % | Druck $O_2$ bei 20°C bar | DP | Flottenver hältnis | Flottenzusammensetzung Gew.% | Farben. Elrepho | COOH mmol/kg |
| 12 | 5.4 | 85.7 | 10 | 1693 ± 38 | 1 : 20 | 0.4 NaOH | 73.8 | 16.3 |
| 13 | 5.4 | 80.8 | 10 | 1534 ± 63 | 1 : 20 | 1.0 $Na_2CO_3$ | 70.2 | n.b. |
| 14 | 5.4 | 89.9 | 10 | 1462 ± 46 | 1 : 20 | 0.4 NaOH + 0.2 $Na_2CO_3$ | 75.0 | 14.0 |
| 15 | 7.8 | 85.2 | 10 | 1528 ± 30 | 1 : 15 | 0.4 NaOH + 0.2 $Na_2CO_3$ | 76.3 | 14.4 |
| 16 | 10.8 | 83.2 | 10 | 1408 ± 53 | 1 : 10 | 0.4 NaOH + 0.2 $Na_2CO_3$ | 69.0 | n.b. |
| 17 | 7.8 | 76.3 | 10 | 908 ± 33 | 1 : 15 | 0.6 NaOH 0.3 $Na_2CO_3$ | 76.9 | n.b. |

Es zeigt sich, daß der Weißgrad ohne nennenswerte Beeinflussung von DP und Ausbeute durch geeignete Zusätze erheblich gesteigert werden kann und daß Flottenverhältnisse bis 1 : 10 problemlos realisierbar sind.

**Beispiel 18**

Der Versuch wurde ausgeführt wie in Beispiel 1, wobei jedoch zusätzlich zu 10 bar $O_2$ noch 10 bar $CO_2$ aufgedrückt wurden (jeweils bei 20°C). Der Gesamtdruck bei 160°C betrug 32 bar. Hierbei entsteht $Na_2CO_3$ durch Reaktion des $CO_2$ mit der in der Flotte vorgelegten NaOH.

Als Reaktionsprodukt wurden aufbereitete Linters mit einer Ausbeute von 91,2 Gew.% und einem DP von 1595 ± 125 erhalten. Alle sichtbaren Verunreinigungen (Samenkapseln etc.) waren entfernt.

**Beispiele 19 bis 21**

Die Beispiele 20 bis 22 wurden analog zu Beispiel 1 durchgeführt, mit der Ausnahme, daß als Gas anstatt Sauerstoff synthetische Luft, enthaltend 21 Vol% $O_2$, Rest $N_2$ verwendetwurde. Die Ergebnisse sind in Tabelle 6 zusammengestellt.

## Tabelle 6

**Aufbereitung von Linters mit synthetischer Luft als Reaktionsgas**

**Flottenverhältnis:** 1 : 19

**NaOH-Konzentration:** 0.4 Gew.%

| Bei-spiel | Temp. [°C] | Zeit [h] | Druck [bar] | Ausbeute [%] | DP | pH-Wert vor Reaktion | nach | Farbe nach Elrepho | COOH mmol/kg | CSB g/kg Cell |
|---|---|---|---|---|---|---|---|---|---|---|
| 19 | 160 | 2 | 10 | 83.1 | 1814 ± 34 | 13.00 | 8.40 | 68.1 | 15.6 | 110.5 |
| 20 | 160 | 2 | 5 | 81.1 | 2213 ± 30 | 13.00 | 9.25 | 63.3 | n.b | n.b |
| 21 | 160 | 1 | 5 | 84.6 | 2492 ± 68 | 13.05 | 9.67 | 56.7 | n.b. | n.b. |

Es zeigte sich, daß hierbei im Vergleich zu den korrespondierenden Versuchen mit reinem Sauerstoff 15 - 20 % höhere DP-Werte bei vergleichbaren Ausbeuten und vergleichbaren CSB-Werten resultieren. Ebenso wurden alle sichtbaren Verunreinigungen wie Samenkapseln etc. vollständig entfernt.

**Beispiel 22**

Dieser Versuch wurde ausgeführt wie in Beispiel 1. Die Reaktionsflüssigkeit wurde jedoch zusätzlich zu den 0.4 Gew.% NaOH mit 0.05 Gew.% Leophen [R] und 0.05 Gew.% Kieralon B [R] (eingetragene Warenzeichen der Fa. BASF) versetzt.

Leophen [R] stellt dabei ein speziell für das alkalische Abkochen von Baumwolle entwickeltes Netz- und Dispergiermittel dar, bei Kieralon B [R] handelt es sich um ein für denselben Zweck entwickeltes Gemisch aus nichtionischen und anionischen Tensiden.

Als Reaktionsprodukt wurden von allen sichtbaren Verunreinigungen befreite Linters mit einem Weißgrad nach Elrepho von 74.8 und einem DP von 1895 ± 67 erhalten.

Die Ausbeute betrug 89,3% und lag damit sogar noch höher als etwa bei Beispiel 1.

13

Somit kann das neue, erfindungsgemäße Verfahren auch dann vorteilhaft angewandt werden, wenn die für die klassischen Beucheverfahren entwickelten Hilfsstoffe eingesetzt werden sollen.

**Beispiel 23**

Ein Baumwollkardenband mit einem Weißgrad nach Elrepho von 66.0 wurde nach dem Verfahren wie in Beispiel 1 bei 140°C, 10 bar $O_2$ (bei 20°C) und einem Flottenverhältnis von 1 : 19 (mit 0.04 Gew.% NaOH in der Reaktionsflüssigkeit) 1 Stunde auf Reaktionsbedingungen gehalten.

Als Reaktionsprodukt wurde eine vollweiße Baumwolle (Weißgrad nach Elrepho: 80.8) in einer Ausbeute von 95 Gew.% und mit einem DP von 5021 ± 84 erhalten. Die Faserlänge und -struktur waren voll erhalten geblieben. Der CSB-Wert der "Ablauge" mit einem pH-Wert von 5.97 betrug umgerechnet 51 g/kg Baumwolle.

**Beispiel 24**

Aus aufbereiteten Linters, hergestellt gemäß Beispiel 17, sowie zum Vergleich aus einer kommerziell erhältlichen Bleichlintersprobe wurden nach üblicher Arbeitsweise Cellulose-Cuoxamlösungen mit jeweils 9 Gew.% Cellulose hergestellt und zu Kapillarmembranen mit einem Trockenlumen (innerer Durchmesser nach Spinnung und Trocknung) von ca. 160 $\mu$m und einer Wandstärke von ca. 8 $\mu$m in bekannter Weise versponnen.

Die mit nach Beispiel 17 aufbereiteten Linters hergestellten Membranen wiesen eine Komplementaktivierung, gemessen als C5a-Wert, von 276 ng/ml und damit einen gegenüber denjenigen aus nach dem Stand der Technik gebeuchten und gebleichten Linters hergestellten um ca. 60% reduzierten C5a-Wert auf.

**Patentansprüche**

1. Verfahren zur Herstellung cellulosischer Membranen in Form von Hohlfäden, Schlauchfolien oder Flachfolien durch Aufbereitung von Baumwollfasern, insbesondere von Baumwoll-Linters, Lösen der aufbereiteten Baumwollfasern bzw. der Linters auf chemischem oder physikalischem Wege und Verformen der so erhaltenen Lösung zu Membranen, dadurch gekennzeichnet, daß man die Baumwollfasern bzw. Baumwoll-Linters in alkalischer Flotte in einem einstufigen Verfahren mit gasförmigem molekularem Sauerstoff behandelt, die Baumwollfasern bzw. Linters von der alkalischen Flotte abtrennt, wäscht und ggf. trocknet, anschließend auf chemischem oder physikalischem Wege in Lösung bringt und die Lösung unter Regeneration oder Ausfällen der Cellulose sodann zu Membranen verarbeitet.

2. Verfahren zur Herstellung cellulosischer Membranen nach Anspruch 1, dadurch gekennzeichet, daß die Baumwollfasern bzw. die Baumwoll-Linters nach dem Cuoxamverfahren gelöst werden.

3. Verfahren zur Herstellung cellulosischer Membranen nach Anspruch 1, dadurch gekennzeichnet, daß die Baumwollfasern bzw. die Baumwoll-Linters nach dem Xanthogenatverfahren gelöst werden.

4. Verfahren zur Herstellung cellulosischer Membranen nach Anspruch 1, dadurch gekennzeichnet, daß die Baumwollfasern bzw. die Baumwoll-Linters in einem Gemisch aus aprotischen Lösemitteln und einem Salz der Elemente Li, Ca, und/oder Mg gelöst werden.

5. Verfahren zur Herstellung cellulosischer Membranen nach Anspruch 1, dadurch gekennzeichet, daß die Baumwollfasern bzw. die Baumwoll-Linters in einem tertiären Aminoxid, gegebenenfalls unter Zusatz eines Cellulose nicht lösenden Verdünnungsmittels, gelöst werden.

6. Verfahren zum Aufbereiten von Baumwollfasern, insbesondere Baumwoll-Linters durch Behandeln mit Oxidationsmitteln, dadurch gekennzeichnet, daß man die Baumwollfasern bzw. Baumwoll-Linters in alkalischer Flotte in einem einstufigen Verfahren mit gasförmigem molekularem Sauerstoff behandelt, die Baumwollfasern bzw. Baumwoll-Linters von der alkalischen Flotte abtrennt, wäscht und gegebenenfalls trocknet.

7. Verfahren nach einem oder mehreren der Ansprüche 1 bis 6, dadurch gekennzeichnet, daß dem gasförmigen molekularen Sauerstoff in einem Bereich von 0,1 bis 80 Gew.% weitere Gase zugesetzt werden.

14

8. Verfahren nach einem oder mehreren der Ansprüche 1 bis 7, dadurch gekennzeichnet, daß als weitere Gase $O_3$, $NO_2$, $CO_2$, $N_2$, $SO_2$, $NH_3$ und/oder Luft, einzeln oder als Gemische, zugesetzt werden.

9. Verfahren nach einem oder mehreren der Ansprüche 1 bis 8, dadurch gekennzeichnet, daß Luft zugegeben wird.

10. Verfahren nach einem oder mehreren der Ansprüche 1 bis 9, dadurch gekennzeichnet, daß das den molekularen Sauerstoff enthaltene Gas ganz oder teilweise rezirkuliert wird.

11. Verfahren nach einem oder mehreren der Ansprüche 1 bis 10, dadurch gekennzeichnet, daß der gasförmige molekulare Sauerstoff in einer Konzentration von 0,001 bis 4 kg/kg Cellulose, bevorzugt in einer Konzentration von 0,01 bis 1,0 kg/kg Cellulose und besonders bevorzugt von 0,02 bis 0,4 kg/kg Cellulose verwendet wird.

12. Verfahren nach einem oder mehreren der Ansprüche 1 bis 11, dadurch gekennzeichnet, daß man in einem geschlossenen Autoklaven arbeitet, wobei Füllgrade von 20-99%, bevorzugt von 50-95%, und Sauerstoffdrücke von 0,5-50 bar, bevorzugt von 1-20 bar und besonders bevorzugt von 5-10 bar eingestellt werden.

13. Verfahren nach einem oder mehreren der Ansprüche 1 bis 12, dadurch gekennzeichnet, daß für die alkalische Flotte anorganische Verbindungen wie z.B. Hydroxide, Oxide und/oder Carbonate der Alkali- und/oder Erdalkalimetalle, ggf. auch Mischungen derselben, verwendet werden.

14. Verfahren nach einem oder mehreren der Ansprüche 1 bis 12, dadurch gekennzeichnet, daß die alkalische Flotte aus wäßrigen ammoniakalischen Lösungen oder aus wäßrigen Lösungen von organischen, alkalisch wirkenden Substanzen gebildet wird.

15. Verfahren nach Anspruch 14, dadurch gekennzeichnet, daß es sich bei den organischen, alkalisch wirkenden Substanzen um Amine handelt.

16. Verfahren nach einem der Ansprüche 13 bis 15, dadurch gekennzeichnet, daß die Gesamtmenge der pro kg Cellulose eingesetzten alkalischen Verbindungen 0,01 bis 0,2 kg und vorzugsweise 0,04 bis 0,12 kg beträgt.

17. Verfahren nach einem oder mehreren der Ansprüche 1 bis 16, dadurch gekennzeichnet, daß Peroxide, Perborate, Bleichaktivatoren, Komplexbildner, oberflächenaktive, dispergierend wirkende Stoffe und/oder Alkohole zugesetzt werden.

18. Verfahren nach einem oder mehreren der Ansprüche 1 bis 17, dadurch gekennzeichnet, daß man die alkalische Flotte und die Linters in beliebiger Reihenfolge in den Reaktor, bevorzugt in einen Druckautoklaven einführt und den Reaktor mit der gewünschten Menge des Gases bzw. Gasgemisches beaufschlagt, wobei der Reaktorinhalt durchmischt und erwärmt wird.

19. Verfahren nach einem oder mehreren der Ansprüche 1 bis 18, dadurch gekennzeichnet, daß die alkalische Flotte eine Temperatur von 40° bis 200°C, bevorzugt von 100° bis 180°C und besonders bevorzugt von 120° bis 160°C aufweist.

20. Verfahren nach einem oder mehreren der Ansprüche 1 bis 19, dadurch gekennzeichnet, daß die Reaktionszeiten zwischen 0,2 und 6 Stunden, bevorzugt zwischen 0,5 bis 3 Stunden und besonders bevorzugt zwischen 1 und 2 Stunden liegen.

21. Verfahren nach einem oder mehreren der Ansprüche 1 bis 20, dadurch gekennzeichnet, daß die Flottenverhältnisse zwischen 1 : 3 bis 1 : 100, bevorzugt zwischen 1 : 5 und 1 : 30 und besonders bevorzugt zwischen 1 : 8 und 1 : 15 liegen.

22. Verfahren nach einem oder mehreren der Ansprüche 1 bis 21, dadurch gekennzeichnet, daß als Reaktor ein Rührreaktor verwendet wird.

**23.** Verfahren nach einem oder mehreren der Ansprüche 1 bis 22, dadurch gekennzeichnet, daß die Baumwollfasern bzw. Baumwoll-Linters im Reaktor fest vorgelegt werden und die Reaktionsflüssigkeit zirkuliert wird.

**24.** Verfahren nach Anspruch 22 oder 23, dadurch gekennzeichnet, daß der Reaktor kontinuierlich betrieben wird.

**25.** Verfahren nach Anspruch 22 oder 23, dadurch gekennzeichnet, daß 2 oder mehr Reaktoren im Wechsel betrieben werden.

**26.** Aufbereitete Baumwollfasern bzw. Linters, hergestellt nach einem Verfahren gemäß einem oder mehreren der Ansprüche 5 bis 25.

**27.** Verfahren zur Herstellung von cellulosischen Membranen, dadurch gekennzeichnet, daß aufbereitete Baumwollfasern bzw. Linters gemäß Anspruch 26 verwendet werden.

**28.** Cellulosische Membranen, erhältlich nach einem Verfahren gemäß Anspruch 27.

**29.** Cellulosische Membranen, erhältlich nach einem Verfahren gemäß einem oder mehreren der Ansprüche 1 bis 5.

**30.** Cellulosische Membranen nach Anspruch 28 oder 29, dadurch gekennzeichnet, daß sie eine Komplementaktivierung, gemessen als C5a, von < 500 ng/ml, vorzugsweise von < 400 ng/ml aufweisen.

**31.** Cellulosische Membranen nach Anspruch 30 mit einer Komplementaktivierung, gemessen als C5a, von < 300 ng/ml.

**32.** Membranen im wesentlichen aus Cellulose oder im wesentlichen aus regenerierter Cellulose, dadurch gekennzeichnet, daß sie eine Komplementaktivierung, gemessen als C5a, von < 500 ng/ml, vorzugsweise von < 400 ng/ml aufweisen.

**33.** Cellulosische Membranen nach Anspruch 32 mit einer Komplementaktivierung, gemessen als C5a, von < 300 ng/ml.

**34.** Verwendung der cellulosischen Membranen nach einem oder mehreren der Ansprüche 28 bis 33 zur Hemodialyse.